# EUROPÄISCHE PATENTSCHRIFT

(11) **EP 2 584 095 B1**
(45) Veröffentlichungstag und Bekanntmachung des Hinweises auf die Patenterteilung: **29.03.2017**
(21) Anmeldenummer: 12007004.0
(22) Anmeldetag: 09.10.2012
(51) Int. Cl.: E01C 23/088, F16H 61/475, B60W 30/188, B60W 10/30, B60W 10/103, B60W 10/02, F16H 59/46

(54) **Selbstfahrende Baumaschine und Verfahren zur Regelung solch einer Baumaschine**
Self-propelled construction vehicle and control method for such a vehicle
Engin automobile et procédé de contrôle d'un tel engin

(30) Priorität: 19.10.2011 DE 102011116268
(43) Veröffentlichungstag der Anmeldung: 24.04.2013
(73) Patentinhaber: Wirtgen GmbH, 53578 Windhagen (DE)
(72) Erfinder: Von Schönebeck, Winfried, 53560 Kalenborn (DE); Schwippert, Sascha, 53639 Königswinter (DE); Barimani, Cyrus, Dr., 53639 Königswinter (DE); Hähn, Günter, Dr., 53639 Königswinter (DE)
(74) Vertreter: Oppermann, Frank

(56) Entgegenhaltungen:
- EP-A2- 1 914 354
- DE-A1- 3 842 405
- DE-A1-102007 062 888
- US-A1- 2005 183 416

## Beschreibung

Die Erfindung betrifft eine selbstfahrende Baumaschine, die über ein Fahrwerk verfügt, das Räder oder Kettenlaufwerke aufweist.

Im Straßenbau werden selbstfahrende Baumaschinen unterschiedlicher Bauart eingesetzt. Zu diesen Maschinen zählen die bekannten Straßenfräsmaschinen, Recycler oder Stabilisierer. Mit den bekannten Straßenfräsmaschinen können bestehende Straßenschichten des Straßenoberbaus abgetragen und mit den bekannten Recyclern bestehende Straßenbeläge wiederhergestellt werden. Die bekannten Stabilisierer dienen der Vorbereitung des Unterbaus für den Straßenbau. Darüber hinaus sind als selbstfahrende Baumaschinen sogenannte Surface Miner beispielsweise zum Abbau von Kohle oder Gestein bekannt.

Die oben genannten selbstfahrenden Baumaschinen verfügen über eine rotierende Fräs- oder Schneidwalze, mit der das Material abgetragen wird.

Der Antrieb der Fräs- oder Schneidwalze erfordert eine relativ hohe Motorleistung. Wenn die Fräs- oder Schneidwalze auf besonders hartes Material trifft, kann die zum Antrieb der Walze erforderliche Leistung so groß werden, dass der Antriebsmotor überlastet wird. Neben der Überlastung des Antriebsmotors stellt sich das Problem, dass beim Auftreffen der Fräs- oder Schneidwalze auf besonders hartes Material die Antriebselemente sowie die Struktur der Baumaschine durch Stoßbeanspruchung überlastet wird. Dieses Problem stellt sich insbesondere bei einem Surface Miner.

Der Antriebsmotor ist bei den bekannten selbstfahrenden Baumaschinen ein Verbrennungsmotor, insbesondere Dieselmotor, dessen Motorcharakteristik durch eine charakteristische Drehmoment-Drehzahl-Kennlinie beschreiben wird. Der Verbrennungsmotor wird mit einer bestimmen Drehzahl betrieben, wobei die Gefahr besteht, das der Verbrennungsmotor bei Überlastung abgewürgt wird.

Zur Übertragung der Antriebsleistung von dem Verbrennungsmotor auf die Räder oder Kettenlaufwerke dient ein erster Leistungsübertragungsstrang, während zur Übertragung der Antriebsleistung von dem Verbrennungsmotor auf die Fräs- oder Schneidwalze ein zweiter Leistungsübertragungsstrang dient. Beide Leistungsübertragungsstränge verfügen jeweils über Getriebesysteme.

Es sind selbstfahrende Baumaschinen bekannt, bei denen das Getriebesystem des Leistungsübertragungsstrangs zur Übertragung der Antriebsleistung auf die Räder ein verstellbares hydrostatisches Getriebe aufweist. Um eine Überlastung des Verbrennungsmotors zu verhindern, ist für das verstellbare hydrostatische Getriebe eine Regeleinrichtung zur Grenzlastregelung vorgesehen.

Die EP 0 497 293 A1 beschreibt ein Verfahren zur Grenzlastregelung eines hydrostatischen Antriebs für eine Baumaschine. Der hydrostatische Antrieb umfasst eine von einem Verbrennungsmotor angetriebene Hydropumpe mit verstellbarem Fördervolumen, die über einen angeschlossenen hydraulischen Kreislauf einen Hydromotor antreibt. Bei einer drohenden Überlastung des Verbrennungsmotors wird die Fördermenge der Hydropumpe reduziert. Die Regelung erfolgt in Abhängigkeit von der Ist-Drehzahl des Verbrennungsmotors, die mit einem Drehzahlsensor an der Abtriebswelle des Motors gemessen wird.

Regeleinrichtungen für hydrostatische Antriebe von Baumaschinen sind beispielsweise auch aus der EP 0 736 708 B1 und EP 0 558 958 B1 bekannt.

Die gattungsbildende EP 1 914 354 A2 beschreibt einen Grabenbagger, der über ein Fahrwerk mit Kettenlaufwerken und eine Antriebseinheit verfügt, die einen ersten Leistungsübertragungsstrang zur Übertragung der Antriebsleistung der Antriebseinheit auf die Kettenlaufwerke und einen zweiten Leistungsübertragungsstrang zur Übertragung der Antriebsleistung der Antriebseinheit auf die Arbeitseinheit aufweist. Der zweite Leistungsübertragungsstrang umfasst ein hydrodynamisches Getriebe, das eine Antriebwelle und eine Abtriebswelle aufweist. Die über den ersten Leistungsübertragungsstrang übertragene Leistung wird mit einer Regeleinrichtung derart geregelt, dass das Verhältnis der Drehzahl der Antriebswelle und der Drehzahl der Abtriebswelle einem vorgegebenen Wert entspricht.

Der Erfindung liegt die Aufgabe zugrunde, den Betrieb einer selbstfahrenden Baumaschine bei einer hohen Belastung zu verbessern.

Die Lösung dieser Aufgabe erfolgt erfindungsgemäß mit den Merkmalen des unabhängigen Vorrichtungs- bzw. Verfahrensanspruchs. Vorteilhafte Ausführungsformen der Erfindung sind Gegenstände der abhängigen Ansprüche.

Die erfindungsgemäße selbstfahrende Baumaschine zeichnet sich dadurch aus, dass das Getriebesystem zur Übertragung der Antriebsleistung von der Antriebseinheit, die mindestens einen Verbrennungsmotor umfasst, auf die Arbeitseinheit, die mindestens ein Arbeitsaggregat umfasst, nicht eine konventionelle Schaltkupplung aufweist, mit der die Arbeitseinheit zugeschaltet werden kann, sondern über ein hydrodynamisches Getriebe verfügt, das eine Antriebswelle und eine Abtriebswelle aufweist. Das hydrodynamische Getriebe hat den Vorteil, dass es weitgehend verschleißfrei arbeitet und Stöße oder Schläge dämpft.

Hydrodynamische Getriebe in Kraftfahrzeugen und Lokomotiven sind dem Fachmann allgemein bekannt. Diese hydrodynamischen Getriebe unterscheiden sich von den hydrostatischen Getrieben dadurch, dass die Übertragung der Leistung bei hohen Strömungsgeschwindigkeiten und niedrigem Druck erfolgt.

Die auf dem Prinzip der hydrodynamischen Kraftübertragung arbeitenden Turbokupplungen zeichnen sich dadurch aus, dass zwischen der Antriebs- und Abtriebswelle eine Drehzahldifferenz (Schlupf) besteht. Dieser Schlupf nimmt bei einem angenommenen konstanten Drehmoment mit zunehmender Drehzahl der Welle ab und nimmt bei einer angenommenen konstanten Drehzahl mit zunehmendem Drehmoment zu.

Bei der erfindungsgemäßen Baumaschine ist die Regeleinrichtung derart ausgebildet, dass die über den ersten Leistungsübertragungsstrang von der Antriebseinheit auf die Räder oder Kettenlaufwerke übertragene Antriebsleistung derart geregelt wird, dass die Drehzahldifferenz zwischen der Antriebswelle und der Abtriebswelle des hydrodynamischen Getriebes des zweiten Leistungsübertragungsstrangs einem vorgegebenen Wert entspricht. Dadurch wird einerseits sichergestellt, dass der Verbrennungsmotor der Antriebseinheit im Grenzlastbereich nicht überlastet wird und zum anderen gewährleistet, dass die selbstfahrende Baumaschine keine Überlastung der Antriebselemente sowie der Struktur der Baumaschine durch Stoßbeanspruchung erfährt.

Wenn die Fräs- oder Schneidwalze der selbstfahrenden Baumaschine auf besonders hartes Material stößt, wird die Antriebsleistung bzw. Vorschubgeschwindigkeit der Baumaschine reduziert, so dass der Verbrennungsmotor nicht überlastet wird. Dabei wird das hydrodynamische Getriebe mit einem konstantem Schlupf betrieben.

Für die erfindungsgemäße Baumaschine ist unerheblich, wie die Regelung der auf die Räder oder Kettenlaufwerke übertragenen Antriebsleistung erfolgt. Bei einer bevorzugten Ausführungsform, bei der der erste Leistungsübertragungsstrang ein Getriebesystem aufweist, das ein verstellbares hydrostatisches Getriebe aufweist, wird das verstellbare hydrostatisches Getriebe derart verstellt, dass die Drehzahldifferenz Δ = n₁ - n₂ zwischen der Antriebswelle und der Abtriebswelle des hydrodynamischen Getriebes einem vorgegebenen Wert entspricht. Bei einem Antrieb, der beispielsweise einen Generator und einen Elektromotor umfasst, kann die Antriebsleistung beispielsweise mit einem Frequenzumwandler geregelt werden.

Eine bevorzugte Ausführungsform der Erfindung sieht eine Einrichtung vor, mit der verschiedene Betriebszustände, insbesondere ein erster und zweiter Betriebszustand vorgegeben werden kann. Die Vorgabe kann manuell mit einer Eingabeeinheit oder automatisch von einer Steuereinheit erfolgen. Die Einrichtung zur Vorgabe der beiden Betriebszustände ist derart ausgebildet, dass die Regeleinrichtung in dem ersten Betriebszustand deaktiviert und in dem zweiten Betriebszustand aktiviert ist. Folglich kann die erfindungsgemäße Regelung zu bzw. abgeschaltet werden. Es ist also möglich, den Betrieb der Maschine mit einem bestimmten Schlupf in dem hydrodynamischen Getriebe des Leistungsübertragungsstrangs für den Antrieb der Arbeitseinheit nur dann vorzusehen, wenn eine Überlastung der Antriebseinheit droht.

In dem ersten Betriebszustand, in dem die Regeleinrichtung deaktiviert ist, kann eine konventionelle Grenzlastregelung erfolgen. Wenn sich aufgrund von härterem Gestein dann die Vorschubgeschwindigkeit der Baumaschine um einen bestimmten Betrag verringern sollte, kann auf den zweiten Betriebszustand, in dem die Regeleinrichtung aktiviert ist, umgeschaltet werden. Die Umschaltung kann automatisch erfolgen, wenn die Vorschubgeschwindigkeit mit einem vorgegebenen Grenzwert verglichen wird. Bei Unterschreiten des Grenzwertes wird dann von dem ersten auf den zweiten Betriebszustand umgeschaltet. Folglich findet eine Umschaltung von einer Grenzlastregelung auf eine Teillastregelung statt.

Für die erfindungsgemäße Regelung ist nicht erheblich, welche Bauart das hydrodynamische Getriebe hat. Entscheidend ist nur, dass das Getriebe einen Schlupf hat, der von der Drehzahl bzw. dem Drehmoment abhängig ist. Es können also alle dem Fachmann bekannten hydrodynamischen Getriebe verwendet werden. Bei einer besonders bevorzugten Ausführungsform der Erfindung ist das hydrodynamische Getriebe eine Turbokupplung.

Das Getriebesystem des Leistungsübertragungsstrangs zur Übertragung der Antriebsleistung der Antriebseinheit auf die Räder oder Kettenlaufwerke weist vorzugsweise mindestens eine Hydropumpe mit einem verstellbaren Fördervolumen auf, die über Hydraulikleitungen mit mindestens einem Hydromotor zum Antrieb der Räder oder Kettenlaufwerke verbunden ist. Bei dieser Ausführungsform wird das Fördervolumen der Hydropumpe von der Regeleinrichtung derart verstellt, dass die Drehzahldifferenz zwischen der Antriebs- und Abtriebswelle des hydrodynamischen Getriebes zur Übertragung der Antriebsleistung von der Antriebseinheit auf die Arbeitseinheit einem vorgegebenen Wert entspricht.

Für die Erfindung ist nicht entscheidend, wie das verstellbare hydrostatische Getriebe des Antriebsstrangs zum Antrieb der Räder oder Laufwerke ausgebildet ist. Allein entscheidend ist, dass das Getriebe verstellbar ist, sodass die Antriebsleistung der Baumaschine veränderbar ist. Neben dem hydrodynamischen Getriebe kann das Getriebesystem des Leistungsübertragungsstrangs zur Übertragung der Antriebsleistung von der Antriebseinheit auf die Arbeitseinheit noch weitere Getriebe aufweisen. Vorzugsweise weist dieser Leistungsübertragungsstrang noch ein Zugmittelgetriebe auf, dessen Antriebselement mit der Abtriebswelle des hydrodynamischen Getriebes und dessen Abtriebselement mit dem Arbeitsaggregat der Arbeitseinheit verbunden ist.

Das Getriebesystem des Leistungsübertragungsstrangs zur Übertragung der Antriebsleistung von der Antriebseinheit auf die Räder oder Kettenlaufwerke kann ebenfalls weitere Getriebe, insbesondere ein Pumpenverteilergetriebe aufweisen, um weitere Aggregate der Baumaschine, beispielsweise Hubsäulen für die Höhenverstellung, Teilantriebe für die Lenkung oder eine Wasserpumpe antreiben zu können.

Im Folgenden wird ein Ausführungsbeispiel der Erfindung unter Bezugnahme auf die Zeichnungen im Einzelnen erläutert.

Es zeigen:
- Fig. 1: als Beispiel für eine selbstfahrende Baumaschine eine Großfräse in der Seitenansicht,
- Fig. 2: die beiden Leistungsübertragungsstränge zum Antrieb der Räder oder Kettenlaufwerke und der Arbeitseinheit der selbstfahrenden Baumaschine in vereinfachter schematischer Darstellung,
- Fig. 3: das von dem hydrodynamischen Getriebe übertragene Drehmoment in Abhängigkeit von der Drehzahldifferenz zwischen der Antriebs- und Abtriebswelle des hydrodynamischen Getriebes und
- Fig. 4: das Drehmoment in Abhängigkeit von der Drehzahl des Verbrennungsmotors.

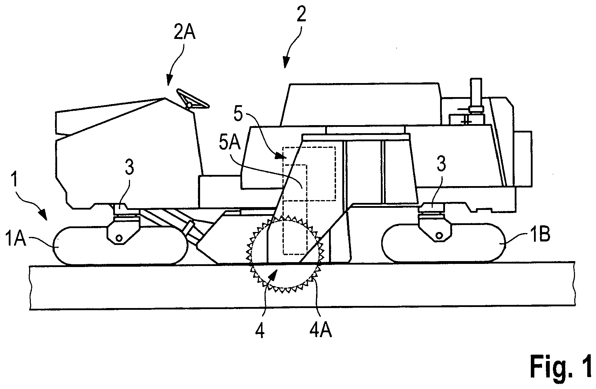

Fig. 1 zeigt als Beispiel für eine selbstfahrende Baumaschine eine sogenannte Großfräse zum Abfräsen von Straßenbelägen aus Asphalt, Beton oder dergleichen. Die Großfräse weist einen von einem Fahrwerk 1 getragenen Maschinenrahmen 2 mit einem Fahrstand 2A auf. Das Fahrwerk 1 der Fräsmaschine umfasst beispielsweise vier Kettenlaufwerke 1A, 1B, die an der Vorder- und Rückseite auf beiden Seiten des Fahrzeugrahmens angeordnet sind. Anstelle von Kettenlaufwerken können auch Räder vorgesehen sein. Die Kettenlaufwerke 1A, 1 B sind an höhenverstellbaren Hubsäulen 3 befestigt, die am Maschinenrahmen 2 angebracht sind.

Die Straßenfräsmaschine verfügt über eine Arbeitseinheit 4 die ein Arbeitsaggregat 4A aufweist. Bei dem Arbeitsaggregat handelt es sich um eine Fräswalze 4A, die mit Fräsmeißeln bestückt ist. Die Fräswalze 4A ist am Maschinenrahmen 2 zwischen den vorderen und hinteren Kettenlaufwerken 1 A, 1 B angeordnet.

Für den Antrieb der Fräswalze 4A verfügt die Fräsmaschine über eine Antriebseinheit 5, die einen Verbrennungsmotor 5A aufweist. Der Verbrennungsmotor 5A treibt neben der Fräswalze 4A auch die Kettenlaufwerke 1A, 1B sowie weitere Aggregate der Fräsmaschine an.

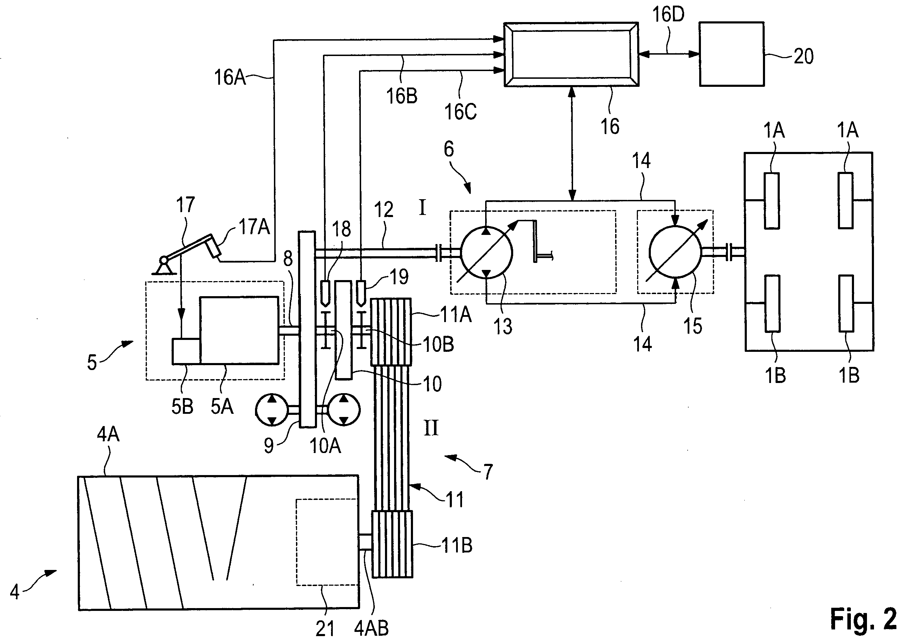

Fig. 2 zeigt die beiden Leistungsübertragungsstränge zur Übertragung der Antriebsleitung der Antriebseinheit 5 auf die Räder oder Kettenlaufwerke 1A, 1B und die Fräswalze 4A. In Fig. 2 sind die Räder oder Kettenlaufwerke nur andeutungsweise dargestellt sind

Die Drehzahl des Verbrennungsmotors 5A kann in bekannter Weise vom Fahrzeugführer mit einem Gaspedal 17 vorgegeben werden. Während des Betriebs der Baumaschine gibt der Fahrzeugführer mit dem Gaspedal 17 eine Drehzahl vor, mit der sich der Verbrennungsmotor unter wirtschaftlichen Gesichtspunkten optimal betreiben lässt. Anstelle eines Gaspedals 17 kann aber auch ein Stellhebel vorgesehen sein.

Zur Übertragung der Antriebsleistung von der Antriebseinheit 5 auf die Kettenlaufwerke 1A, 1B dient der erste Leistungsübertragungsstrang I, während zur Übertragung der Antriebsleistung von der Antriebseinheit 5 auf die Fräswalze 4 der zweite Leistungsübertragungsstrang II dient. Beide Leistungsübertragungsstränge I und II umfassen jeweils ein Getriebesystem 6, 7, die nachfolgend im Einzelnen beschrieben werden.

Die Abtriebswelle 8 des Verbrennungsmotors 5A ist über ein Pumpenverteilergetriebe 9 mit der Antriebswelle 10 A eines hydrodynamischen Getriebes 10, insbesondere eines Turbobetriebes, verbunden. Die Abtriebswelle 10B des Turbobetriebes 10 ist mit einem Antriebselement 11A eines Zugmittelgetriebes 11 verbunden, dessen Abtriebselement 11B mit der Antriebswelle 4AB der Fräswalze 4A verbunden ist. Folglich wird die Fräswalze 4A von dem Verbrennungsmotor 5A über das hydrodynamische Getriebe 10 und das Zugmittelgetriebe 11 mechanisch angetrieben. Zwischen dem Zugmittelgetriebe 11 und der Fräswalze 4A kann noch ein Planetengetriebe 21 vorgesehen sein.

Der Fahrantrieb ist bei der Fräsmaschine ein hydraulischer Antrieb. Das Pumpenverteilergetriebe 9 ist über eine Welle 12 mit einer Hydropumpe 13 verbunden, deren Volumenstrom in Abhängigkeit von einem Steuersignal einstellbar ist. Die Hydropumpe 13 ist wiederum über Hydraulikleitungen 14 mit einem Hydromotor 15 verbunden, der die Kettenlaufwerke 1A, 1B antreibt. Anstelle einer Hydropumpe und eines Hydromotors können auch mehrere Hydropumpen und/oder mehrere Hydromotoren vorgesehen sein, die den einzelnen Kettenlaufwerken zugeordnet sind. Derartige Antriebssysteme sind dem Fachmann bekannt.

Der Verstellmechanismus zur Einstellung des Fördervolumens der Hydropumpe 13 ist nicht im Einzelnen dargestellt. Die Einstellung des Fördervolumens der Hydropumpe 13 erfolgt in Abhängigkeit von einem Steuersignal einer Regeleinrichtung 16. Die Regeleinrichtung 16 ist über eine Leitung 16A mit einem Sensor 17A verbunden, der die Stellung des Gaspedals 17 detektiert. Darüber hinaus ist die Regeleinrichtung 16 über eine Leitung 16B mit einem Drehzahlsensor 18 verbunden, der an der Antriebswelle 10A des hydrodynamischen Getriebes 10 angeordnet ist. Über eine Leitung 16C ist die Regeleinrichtung 16 mit einem Drehzahlsensor 19 verbunden, der an der Abtriebswelle 10B des hydrodynamischen Getriebes 10 angeordnet ist. Der Drehzahlsensor 18 misst die Drehzahl n₁ an der Antriebswelle 10 A und der Drehzahlsensor 19 die Drehzahl n₂ an der Abtriebswelle 10 B des hydrodynamischen Getriebes 10. Die Regeleinrichtung 16 berechnet aus der Drehzahl n₁ und n₂ die Drehzahldifferenz Δ = n_{1 -} n₂, die dem Schlupf des hydrodynamischen Getriebes 10 entspricht.

Die Regeleinrichtung 16 ist über eine Leitung 16D mit einer Einrichtung 20 zur Vorgabe von zwei Betriebszuständen verbunden. Wenn der Fahrzeugführer beispielsweise den ersten Betriebszustand vorgibt, ist die erfindungsgemäße Regelung, die nachfolgend noch im Einzelnen beschrieben wird, nicht aktiv, während die Regelung in dem zweiten Betriebszustand aktiv ist. Der Fahrzeugführer wird die erfindungsgemäße Regelung immer dann aktivieren, wenn die Gefahr einer Überlastung des Verbrennungsmotors besteht.

Eine Gefahr der Überlastung oder sogar des Abwürgens des Verbrennungsmotors besteht grundsätzlich insbesondere dann, wenn die Fräswalze auf besonders hartes Material stößt und die Räder oder Kettenlaufwerke der Straßenfräsmaschine mit voller Leistung angetrieben werden.

Wenn die Regelung aktiv ist, wird der Volumenstrom der Hydropumpe 13 von der Regeleinrichtung 16 derart eingestellt, dass die Drehzahldifferenz (Schlupf) Δ = n_{1 -} n₂ gleich einem vorgegebenen Wert ist. Dieser Wert kann von dem Fahrzeugführer vorgegeben werden. Beispielsweise kann die Vorgabe des Werts auf einer nicht dargestellten Eingabeeinheit erfolgen. Beispielsweise kann der Wert für den Schlupf auf einer Tastatur oder dergleichen eingegeben werden. Die Eingabeeinheit kann auch eine Auswahl von verschiedenen Werten für den Schlupf vorgeben, zwischen denen der Fahrzeugführer einen Wert auswählen kann. Im einfachsten Fall kann die Eingabeeinheit ein Schalter mit mehreren Schaltstellungen sein, der vom Fahrzeugführer zur Auswahl eines bestimmten Schlupfes betätigt wird. Es ist aber auch möglich, dass ein fester Wert für den Schlupf von der Regeleinrichtung vorgegeben wird, der vom Fahrzeugführer nicht veränderbar ist.

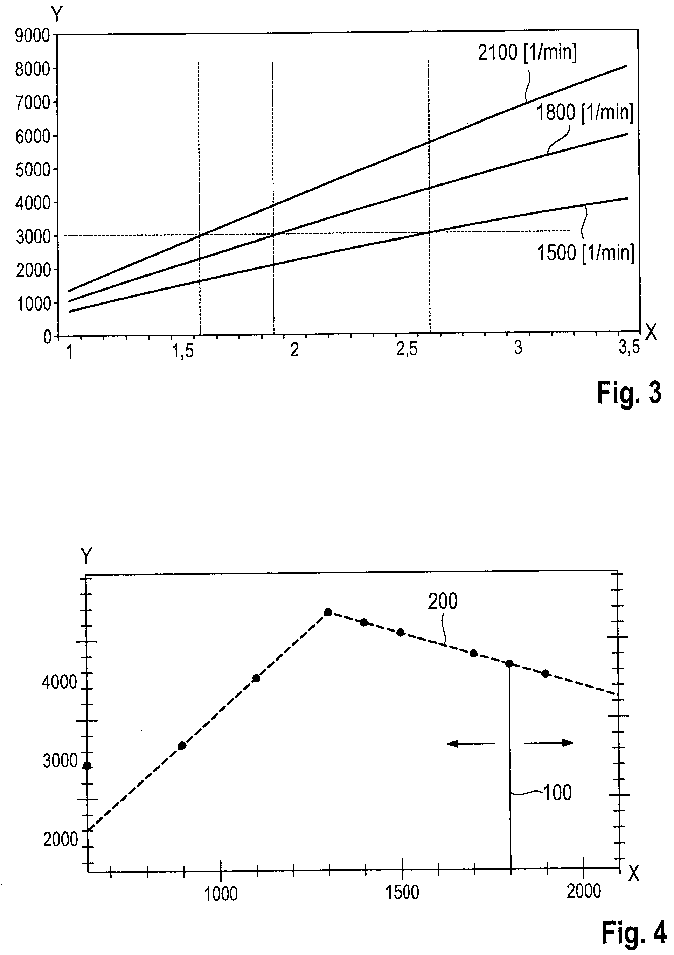

Fig. 3 zeigt die Abhängigkeit des von dem hydrodynamischen Getriebe 10 übertragenen Drehmoments von dem Schlupf Δ = n_{1 -} n₂ für drei verschiedene Drehzahlen des Verbrennungsmotors (2100 [1/min], 1800 [1/min] und 1500 [1/min]). Auf der X-Achse ist der Schlupf [%] und auf der Y-Achse ist das Drehmoment [Nm] dargestellt. Es zeigt sich, dass bei einer bestimmten Drehzahl mit der Vorgabe eines bestimmten Schlupfs ein bestimmtes Drehmoment von dem hydrodynamischen Getriebe übertragen werden kann. Wenn der Verbrennungsmotor beispielsweise mit 2100/min läuft, wird bei der Vorgabe eines Schlupfs von etwa 1,6 % ein Drehmoment von 3000 Nm übertragen. Wenn eine kleinere Drehzahl für den Verbrennungsmotor gewählt wird, beispielsweise 1800/min oder 1500/min, wird bei dem gleichen Schlupf von etwa 1,6 % ein kleineres Drehmoment übertragen, das bei etwa 2200 Nm bzw. 1300 Nm liegt.

Im Gegensatz zu einer konventionellen Grenzlastregelung erlaubt die erfindungsgemäße Regelung dem Fahrzeugführer durch Einstellung eines bestimmten Schlupfes bei einer bestimmten Drehzahl, die der Fahrzeugführer ebenfalls wählen kann, ein bestimmtes Drehmoment vorzugeben, mit dem der Verbrennungsmotor betrieben wird, ohne dass der Verbrennungsmotor überlastet wird. Der Fahrzeugführer kann Schlupf und Drehzahl unabhängig voneinander vorgeben, um die Baumaschine optimal betreiben zu können. Dies wird nachfolgend im Einzelnen erläutert.

Der Fahrzeugführer gibt zunächst durch Betätigung des Gaspedals 17 oder Stellhebels eine bestimmte Drehzahl für den Verbrennungsmotor 5A vor. Während des normalen Betriebs der Baumaschine hält die Motorsteuerung 5B des Verbrennungsmotors 5A die vom Fahrzeugführer vorgegebene Drehzahl konstant, soweit dies die Leistung der Motors zulässt.

Mit der Vorgabe einer bestimmten Drehzahl für den Verbrennungsmotor gibt der Fahrzeugführer auch die Schnittgeschwindigkeit vor, mit der die Fräsmeißel der Fräswalze rotieren, die von dem Verbrennungsmotor angetrieben wird. Der Fahrzeugführer kann die Drehzahl des Verbrennungsmotors in Abhängigkeit von dem abzufräsenden Material vorgeben. Beispielsweise kann der Fahrzeugführer eine höhere Drehzahl bei einem weicheren Gestein und eine niedrigere Drehzahl bei einem härteren Gestein vorgeben, so dass die Fräswalze bei härterem Gestein langsamer als bei weicherem Stein rotiert.

Wenn die Fräsmeißel der Fräswalze plötzlich auf besonders hartes Gestein treffen sollten, treten bei Baumaschinen mit einer konventionellen Grenzlastregelung in der Praxis Probleme auf. Es sei angenommen, dass der Fahrzeugführer für eine bestimmte Härte des Gesteins eine bestimmte Drehzahl für den Verbrennungsmotor und somit eine bestimmte Schnittgeschwindigkeit für die Fräßmeißel vorgibt. Wenn die Fräßmeißel der Fräswalze dann plötzlich auf Gestein treffen, das härter als das Gestein ist, für das der Fahrzeugführer eine bestimmte Drehzahl vorgegeben hat, wird die Vorschubgeschwindigkeit der Baumaschine entsprechend reduziert, um die Drehzahl des Verbrennungsmotors konstant halten zu können.

Fig. 4 zeigt die für einen Verbrennungsmotor charakteristische Abhängigkeit von Drehmoment und Drehzahl. Auf der X-Achse ist die Drehzahl [1/min] und auf der Y-Achse ist das Drehmoment [Nm] dargestellt. Bei einer konventionellen Grenzlastreglung werden die Betriebspunkte des Verbrennungsmotors im Grenzlastbereich durch die Drehmoment-Drehzahl-Kennlinie (Dachkurve) vorgegeben. Die Grenzlastregelung erfolgt derart, dass die Betriebspunkte des Verbrennungsmotors im Grenzlastbereich auf der Dachkurve 200 liegen. Zwar kann der Fahrzeugführer unterschiedliche Drehzahlen vorgeben. Mit der Vorgabe einer bestimmten Drehzahl gibt der Fahrzeugführer aber auch ein bestimmtes Drehmoment vor, das sich aus der Dachkurve ergibt.

Wenn die Drehzahl des Verbrennungsmotors und somit die Schnittgeschwindigkeit der Fräsmeißel im Grenzlastbereich konstant gehalten wird, fräsen die Fräsmeißel mit zu hoher Schnittgeschwindigkeit, so dass die Gefahr besteht, dass die Fräsmeißel beschädigt werden.

Bei der konventionellen Grenzlastregelung besteht für den Fahrzeugführer grundsätzlich die Möglichkeit, den Verbrennungsmotor im Grenzlastbereich mit einer niedrigeren Drehzahl, d. h. mit einer niedrigeren Schnittgeschwindigkeit der Fräßmeißel, zu betreiben. Wenn der Fahrzeugführer eine niedrigere Drehzahl für den Verbrennungsmotor einstellt, erhöht sich aufgrund der für den Verbrennungsmotor charakteristischen Beziehung zwischen Drehmoment und Drehzahl das Drehmoment des Verbrennungsmotors. In der Praxis können aber bei einem zu hohen Drehmoment durch Stoßbeanspruchung die Antriebselemente sowie die Struktur der Baumaschine überlastet werden. Denn eine Erhöhung des Drehmoments setzt voraus, dass die Baumaschine mit ihrem Eigengewicht noch eine ausreichende Aufstandskraft ausüben kann, die dem hohen Drehmoment entspricht.

Im Gegensatz zu einer konventionellen Grenzlastregelung sieht die erfindungsgemäße Regeleinrichtung 16 vor, das verstellbare hydrostatische Getriebe 10 derart zu regeln, d. h. die Vorschubgeschwindigkeit der Baumaschine derart einzustellen, dass der Schlupf Δ = n_{1 -} n₂ einen vorgegebenen Wert annimmt. Der Fahrzeugführer kann also für den Schlupf einen bestimmten Wert vorgeben. Dabei kann der Fahrzeugführer auch die Drehzahl des Verbrennungsmotors verändern.

Mit der Vorgabe eines bestimmten Schlupfes und der Veränderung der Drehzahl kann der Fahrzeugführer den Verbrennungsmotor der Baumaschine bei unterschiedlichen Betriebspunkten betreiben, die unterhalb der Dachkurve liegen (Fig. 4). Es erfolgt also keine konventionelle Grenzlastregelung, bei der die Betriebspunkte im Grenzlastbereich auf der Dachkurve liegen. Mit der Verringerung der Drehzahl ist also keine Erhöhung des Drehmoments verbunden (Fig. 4).

In der Praxis wird der Fahrzeugführer bei härterem Gestein eine kleinere Drehzahl und bei weicherem Gestein eine höhere Drehzahl wählen. Mit der Vorgabe eines bestimmten Schlupfes, den der Fahrzeugführer unabhängig von der vorgegebenen Drehzahl einstellen kann, kann der Fahrzeugführer einen optimalen Betriebspunkt wählen, der unterhalb der Dachkurve liegt.

Es sei angenommen, dass eine Drehzahl von 1800 [1/min] vorgegeben wird. Der Fahrzeugführer kann dann durch Einstellung eines bestimmten Schlupfes für den Verbrennungsmotor die Betriebspunkte wählen, die auf der in Fig. 4 gezeigten Linie 100 liegen. Das sich bei der vorgebenden Drehzahl und dem vorgegebenen Schlupf einstellende Drehmoment ergibt sich dabei aus Fig. 3.

Wenn der Fahrzeugführer eine höhere oder niedrigere Drehzahl einstellt, kann er den Motor bei Betriebspunkten betreiben, die in Fig. 4 links oder rechts der Linie 100 liegen. Der Zusammenhang von Drehzahl, Drehmoment, Schlupf ergibt sich dabei wieder aus den Figuren 3 und 4. Folglich kann der Fahrzeugführer alle Betriebspunkte einstellen, die in einem bestimmten Drehzahlbereich unterhalb der Dachkurve liegen.

Als Beispiel für die erfindungsgemäße Regelung sei angenommen, dass die Fräsmmeißel der Fräswalze auf härteres Gestein treffen. Dann regelt die erfindungsgemäße Regelung die Antriebsleistung so, dass der Schlupf Δ = n_{1 -} n₂ einen vorgegebenen Wert annimmt, d. h. konstant bleibt. Dies führt zu einer Reduzierung des Drehmoments bei gleichbleibender Drehzahl (Fig. 3). Folglich werden die Fräsmeißel zwar mit der gleichen Schnittgeschwindigkeit, aber bei einem niedrigeren Drehmoment betrieben.

## Patentansprüche

1. Selbstfahrende Baumaschine mit
einem Fahrwerk (1), das Räder oder Kettenlaufwerke (1A, 1B) aufweist,
einer Arbeitseinheit (4), die mindestens ein Arbeitsaggregat (4A) aufweist,
einer Antriebseinheit (5), die mindestens einen Verbrennungsmotor (5A) aufweist,
einem ersten Leistungsübertragungsstrang (I) zur Übertragung der Antriebsleistung von der Antriebseinheit (5) auf die Räder oder Kettenlaufwerke (1A, 1B), wobei der erste Leistungsübertragungsstrang (I) derart ausgebildet ist, dass die zu übertragende Leistung regelbar ist,
einen zweiten Leistungsübertragungsstrang (II) zur Übertragung der Antriebsleistung von der Antriebseinheit (5) auf die Arbeitseinheit (4), welcher ein Getriebesystem (10) aufweist, und
einer Regeleinrichtung (16) zur Regelung der über den ersten Leistungsübertragungsstrang (I) übertragenen Leistung,
wobei das Getriebesystem (7) des zweiten Leistungsübertragungsstrangs (II) ein hydrodynamisches Getriebe (10) mit einer Antriebswelle (10A) und einer Abtriebswelle (10B) aufweist,
**dadurch gekennzeichnet, dass**
das Arbeitsaggregat (4A) der Arbeitseinheit (4) eine Fräswalze ist,
eine Einrichtung (18, 19) zum Messen der Differenz der Drehzahl n₁ der Antriebswelle und der Drehzahl n₂ der Abtriebswelle vorgesehen ist, und
die Regeleinrichtung (16) derart ausgebildet ist, dass die über den ersten Leistungsübertragungsstrang (I) übertragene Leistung derart geregelt wird, dass die Drehzahldifferenz Δ = n_{1 -} n₂ zwischen der Antriebswelle und der Abtriebswelle des hydrodynamischen Getriebes einem vorgegebenen Wert entspricht.

2. Selbstfahrende Baumaschine nach Anspruch 1, **dadurch gekennzeichnet, dass** der erste Leistungsübertragungsstrang (I) ein Getriebesystem (6) aufweist, das ein verstellbares hydrostatisches Getriebe (13, 14, 15) aufweist, wobei das verstellbare hydrostatisches Getriebe (13, 14, 15) derart verstellt wird, dass die Drehzahldifferenz Δ = n_{1 -} n₂ zwischen der Antriebswelle und der Abtriebswelle des hydrodynamischen Getriebes einem vorgegebenen Wert entspricht.

3. Selbstfahrende Baumaschine nach Anspruch 1 oder 2, **dadurch gekennzeichnet, dass** eine Einrichtung (20) zur Vorgabe eines ersten Betriebszustands und eines zweiten Betriebszustands vorgesehen ist, die derart ausgebildet ist, dass die Regeleinrichtung (16) in dem ersten Betriebszustand deaktiviert und in dem zweiten Betriebszustand aktiviert ist.

4. Selbstfahrende Baumaschine nach einem der Ansprüche 1 bis 3, **dadurch gekennzeichnet, dass** das hydrodynamische Getriebe (10) eine Turbokupplung ist.

5. Selbstfahrende Baumaschine nach einem der Ansprüche 2 bis 4, **dadurch gekennzeichnet, dass** das Getriebesystem (6) des ersten Leistungsübertragungsstrangs (I) mindestens eine Hydropumpe (13) mit einem verstellbaren Fördervolumen aufweist, die über Hydraulikleitungen (14) mit mindestens einem Hydromotor (15) zum Antrieb der Räder oder Kettenlaufwerke (1A, 1B) verbunden ist.

6. Selbstfahrende Baumaschine nach einem der Ansprüche 1 bis 5, **dadurch gekennzeichnet, dass** das Getriebesystem (7) des zweiten Leistungsübertragungsstrangs (II) ein Zugmittelgetriebe (11) aufweist, dessen Antriebselement (11A) mit der Abtriebswelle (10B) des hydrodynamischen Getriebe (10) und dessen Abtriebselement (11B) mit dem Arbeitsaggregat (4A) der Arbeitseinheit (4) verbunden ist.

7. Verfahren zur Regelung einer selbstfahrenden Baumaschine, insbesondere Straßenfräsmaschine, Stabilisierer oder Recycler, wobei die Baumaschine aufweist:
ein Fahrwerk (1A, 1B), das Räder oder Kettenlaufwerke (1) aufweist,
eine Arbeitseinheit (4), die mindestens ein Arbeitsaggregat (4A) aufweist,
eine Antriebseinheit (5), die mindestens einen Verbrennungsmotor (5A) aufweist,
einen ersten Leistungsübertragungsstrang (I) zur Übertragung der Antriebsleistung der Antriebseinheit (5) auf die Räder oder Kettenlaufwerke (1A, 1B), wobei der erste Leistungsübertragungsstrang (I) derart ausgebildet ist, dass die zu übertragende Leistung regelbar ist,
einen zweiten Leistungsübertragungsstrang (II) zur Übertragung der Antriebsleistung der Antriebseinheit (5) auf die Arbeitseinheit (4), welcher ein Getriebesystem (7) aufweist, das ein hydrodynamisches Getriebe (10) mit einer Antriebswelle (10A) und einer Abtriebswelle (10B) aufweist
**dadurch gekennzeichnet, dass**
das Arbeitsaggregat (4A) der Arbeitseinheit (4) eine Fräswalze ist, und
die zu übertragende Leistung des ersten Leistungsübertragungsstrangs (I) derart geregelt wird, dass die Drehzahldifferenz Δ = n_{1 -} n₂ zwischen der Antriebswelle (10A) und der Abtriebswelle (10B) des hydrodynamischen Getriebes (10) einem vorgegebenen Wert entspricht.

8. Verfahren nach Anspruch 7, **dadurch gekennzeichnet, dass** der erste Leistungsübertragungsstrang (I) ein Getriebesystem (6) aufweist, das ein verstellbares hydrostatisches Getriebe (13, 14, 15) aufweist, wobei das verstellbare hydrostatische Getriebe (13, 14, 15) derart verstellt wird, dass die Drehzahldifferenz Δ = n_{1 -} n₂ zwischen der Antriebswelle (10A) und der Abtriebswelle (10B) des hydrodynamischen Getriebes (10) einem vorgegebenen Wert entspricht.

9. Verfahren nach Anspruch 7 oder 8, **dadurch gekennzeichnet, dass** ein erster Betriebszustand und ein zweiter Betriebszustand vorgesehen sind, wobei die Regelung der zu übertragenden Leistung des ersten Leistungsübertragungsstrangs (I) in dem ersten Betriebszustand deaktiviert wird und in dem zweiten Betriebszustand aktiviert wird.

## Claims

1. Self-propelling construction machine having
a chassis (1) which has wheels or crawler track units (1 A, 1 B),
a working unit (4) which has at least one working assembly (4A),
a drive unit (5) which has at least one internal combustion engine (5A),
a first power transmission line (I) for transmitting the drive power from the drive unit (5) to the wheels or crawler track units (1 A, 1 B), wherein the first power transmission line (I) is designed in such a way that the power to be transmitted can be controlled,
a second power transmission line (II) for transmitting the drive power from the drive unit (5) to the working unit (4) which has a gear mechanism system (10), and
a control device (16) for controlling the power which is transmitted via the first power transmission line (I),
the gear mechanism system (7) of the second power transmission line (II) having a hydrodynamic gear mechanism (10) with a drive shaft (10A) and an output shaft (10B),
**characterized in that**
the working assembly (4A) of the working unit (4) is a milling roller,
a device (18, 19) for measuring the difference between the rotational speed n₁ of the drive shaft and the rotational speed n₂ of the output shaft is provided, and
the control device (16) is embodied in such a way that the power which is transmitted via the first power transmission line (I) is controlled in such a way that the rotational speed difference Δ = n_{1 -} n₂ between the drive shaft and the output shaft of the hydrodynamic gear mechanism corresponds to a predefined value.

2. Self-propelling construction machine according to Claim 1, **characterized in that** the first power transmission line (I) has a gear mechanism system (6) which has an adjustable hydrostatic gear mechanism (13, 14, 15), wherein the adjustable hydrostatic gear mechanism (13, 14, 15) is adjusted in such a way that the rotational speed difference Δ = n_{1 -} n₂ between the drive shaft and the output shaft of the hydrodynamic gear mechanism corresponds to a predefined value.

3. Self-propelling construction machine according to Claim 1 or 2, **characterized in that** a device (20) for predefining a first operating state and a second operating state is provided, which device (20) is embodied in such a way that the control device (16) is deactivated in the first operating state and activated in the second operating state.

4. Self-propelling construction machine according to one of Claims 1 to 3, **characterized in that** the hydrodynamic gear mechanism (10) is a turboclutch.

5. Self-propelling construction machine according to one of Claims 2 to 4, **characterized in that** the gear mechanism system (6) of the first power transmission line (I) has at least one hydraulic pump (13) with an adjustable delivery volume, which hydraulic pump (13) is connected via hydraulic lines (14) to at least one hydraulic motor (15) for driving the wheels or crawler track units (1A, 1 B).

6. Self-propelling construction machine according to one of Claims 1 to 5, **characterized in that** the gear mechanism system (7) of the second power transmission line (II) has a traction drive (11) whose drive element (11 A) is connected to the output shaft (10B) of the hydrodynamic gear mechanism (10) and whose output element (11 B) is connected to the working assembly (4A) of the working unit (4).

7. Method for controlling a self-propelling construction machine, in particular a road milling machine, stabiliser or recycler, wherein the construction machine has:
a chassis (1A, 1 B) which has wheels or crawler track units (1),
a working unit (4) which has at least one working assembly (4A),
a drive unit (5) which has at least one internal combustion engine (5A),
a first power transmission line (I) for transmitting the drive power of the drive unit (5) to the wheels or crawler track units (1 A, 1 B), wherein the first power transmission line (I) is embodied in such a way that the power to be transmitted can be controlled,
a second power transmission line (II) for transmitting the drive power of the drive unit (5) to the working unit (4), which second power transmission line (II) has a gear mechanism system (7) which has a hydrodynamic gear mechanism (10) with a drive shaft (10A) and an output shaft (10B),
**characterized in that**
the working assembly (4A) of the working unit (4) is a milling roller, and
the power to be transmitted by the first power transmission line (I) is controlled in such a way that the rotational speed difference Δ = n_{1 -} n₂ between the drive shaft (10A) and the output shaft (10B) of the hydrodynamic gear mechanism (10) corresponds to a predefined value.

8. Method according to Claim 7, **characterized in that** the first power transmission line (I) has a gear mechanism system (6) which has an adjustable hydrostatic gear mechanism (13, 14, 15), wherein the adjustable hydrostatic gear mechanism (13, 14, 15) is adjusted in such a way that the rotational speed difference Δ = n_{1 -} n₂ between the drive shaft (10A) and the output shaft (10B) of the hydrodynamic gear mechanism (10) corresponds to a predefined value.

9. Method according to Claim 7 or 8, **characterized in that** a first operating state and a second operating state are provided, wherein the control of the power to be transmitted by the first power transmission line (I) is deactivated in the first operating state and activated in the second operating state.

## Revendications

1. Engin de chantier autopropulsé avec
un châssis (1), qui comprend des roues ou des trains de roulement à chenilles (1A, 1B),
une unité de travail (4), qui comprend au moins un organe de travail (4A),
une unité d'entraînement (5) qui comprend au moins un moteur à combustion interne (5A),
une première chaîne de transmission de puissance (I) pour la transmission de la puissance d'entraînement de l'unité d'entraînement (5) vers les roues ou les trains de roulement à chenilles (1A, 1B), la première chaîne de transmission de puissance (I) étant conçue de façon à pouvoir être réglée à la puissance à transmettre,
une deuxième chaîne de transmission de puissance (II) pour la transmission de la puissance d'entraînement de l'unité d'entraînement (5) vers l'unité de travail (4), qui comprend un système de transmission (10), et
un dispositif de réglage (16) pour la régulation de la puissance transmise par l'intermédiaire de la première chaîne de transmission de puissance (I),
le système de transmission (7) de la deuxième chaîne de transmission de puissance (II) comprenant une transmission hydrodynamique (10) avec un arbre d'entraînement (10A) et un arbre de sortie (10B),
**caractérisé en ce que**
l'organe de travail (4A) de l'unité de travail (4) est un rouleau de fraisage,
un dispositif (18, 19) est prévu pour la mesure de la différence de la vitesse de rotation n₁ de l'arbre d'entraînement et de la vitesse de rotation n₂ de l'arbre de sortie, et
le dispositif de réglage (16) est conçu de façon à ce que la puissance transmise par l'intermédiaire de la première chaîne de transmission de puissance (I) soit réglée de façon à ce que la différence de vitesse de rotation Δ = n₁ - n₂ entre l'arbre d'entraînement et l'arbre de sortie de la transmission hydrodynamique corresponde à une valeur prédéterminée.

2. Engin de chantier autopropulsé selon la revendication 1, **caractérisé en ce que** la première chaîne de transmission de puissance (I) comprend un système de transmission (6) qui comprend une transmission hydrostatique réglable (13, 14, 15), la transmission hydrostatique réglable (13, 14, 15) étant réglée de façon à ce que la différence de vitesse de rotation Δ = n₁ - n₂ entre l'arbre d'entraînement et l'arbre de sortie de la transmission hydrodynamique corresponde à une valeur prédéterminée.

3. Engin de chantier autopropulsé selon la revendication 1 ou 2, **caractérisé en ce qu'**un dispositif (20) est prévu pour prédéterminer un premier état de fonctionnement et un deuxième état de fonctionnement, qui est conçu de façon à ce que le dispositif de réglage (16) soit désactivé dans le premier état de fonctionnement et activé dans le deuxième état de fonctionnement.

4. Engin de chantier autopropulsé selon l'une des revendications 1 à 3, **caractérisé en ce que** la transmission hydrodynamique (10) est un turbocôupleur.

5. Engin de chantier autopropulsé selon l'une des revendications 2 à 4, **caractérisé en ce que** le système de transmission (6) de la première chaîne de transmission de puissance (I) comprend au moins une pompe hydraulique (13) avec un volume de refoulement réglable, qui est reliée par l'intermédiaire de conduites hydrauliques (14) à au moins un moteur hydraulique (15) pour l'entraînement des roues ou des trains de roulement à chenilles (1A, 1B).

6. Engin de chantier autopropulsé selon l'une des revendications 1 à 5, **caractérisé en ce que** le système de transmission (7) de la deuxième chaîne de transmission de puissance (II) comprend une transmission à moyen de traction (11) dont l'élément d'entraînement (11A) est relié à l'arbre de sortie (10B) de la transmission hydrodynamique (10) et dont l'élément de sortie (11B) est relié à l'organe de travail (4A) de l'unité de travail (4).

7. Procédé pour la régulation d'un engin de chantier autopropulsé, plus particulièrement une fraiseuse routière, un stabilisateur ou un recycleur, l'engin de chantier comprenant :
un châssis (1A, 1B) qui comprend des roues ou des trains de roulement à chenilles (1A, 1B),
une unité de travail (4), qui comprend au moins un organe de travail (4A),
une unité d'entraînement (5) qui comprend au moins un moteur à combustion interne (5A),
une première chaîne de transmission de puissance (I) pour la transmission de la puissance d'entraînement de l'unité de travail (5) vers les roues ou les trains de roulement à chenilles (1A, 1B), la première chaîne de transmission de puissance (I) étant conçue de façon à pouvoir être réglée à la puissance à transmettre,
une deuxième chaîne de transmission de puissance (II) pour la transmission de la puissance d'entraînement de l'unité d'entraînement (5) vers l'unité de travail (4), qui comprend un système de transmission (7), qui comprend une transmission hydrodynamique (10) avec un arbre d'entraînement (10A) et un arbre de sortie (10B),
**caractérisé en ce que**
l'organe de travail (4A) de l'unité de travail (4) est un rouleau de fraisage et
la puissance à transmettre de la première chaîne de transmission de puissance (I) est réglée de façon à ce que la différence de vitesse de rotation Δ = n₁ - n₂ entre l'arbre d'entraînement (10A) et l'arbre de sortie (10B) de la transmission hydrodynamique (10) corresponde à une valeur prédéterminée.

8. Procédé selon la revendication 7, **caractérisé en ce que** la première chaîne de transmission de puissance (I) comprend un système de transmission (6) qui comprend une transmission hydrostatique réglable (13, 14, 15), la transmission hydrostatique réglable (13, 14, 15) étant réglée de façon à ce que la différence de vitesse de rotation Δ = n₁ - n₂ entre l'arbre d'entraînement (10A) et l'arbre de sortie (10B) de la transmission hydrodynamique (10) corresponde à une valeur prédéterminée.

9. Procédé selon la revendication 7 ou 8, **caractérisé en ce qu'**un premier état de fonctionnement et un deuxième état de fonctionnement sont prévus, la régulation de la puissance à transmettre de la première chaîne de transmission de puissance (I) étant désactivée dans le premier état de fonctionnement et étant activée dans le deuxième état de fonctionnement.
